# EUROPEAN PATENT SPECIFICATION

(11) **EP 2 059 707 B1**
(45) Date of publication and mention of the grant of the patent: **03.11.2010**
(21) Application number: 07820076.3
(22) Date of filing: 07.09.2007
(51) Int. Cl.: F16L 37/098

(54) **ARRANGEMENT FOR CONNECTING TUBE ELEMENTS IN A VENTILATION DUCT SYSTEM**
ANORDNUNG ZUR VERBINDUNG VON RÖHRENELEMENTEN IN EINEM BELÜFTUNGSKANALSYSTEM
DISPOSITIF POUR CONNECTER DES ÉLÉMENTS TUBULAIRES DANS UN SYSTÈME DE CONDUIT DE VENTILATION

(30) Priority: 08.09.2006 SE 0601856; 08.09.2006 US 843208 P
(43) Date of publication of application: 20.05.2009
(73) Proprietor: Lindab AB, 269 82 Bastad (SE)
(72) Inventor: ANDERSSON, Pontus, S-262 43 Ängelholm (SE); MATTSSON, Lars-Åke, S-269 96 Båstad (SE); HÖGMAN, Sten, S-269 62 Grevie (SE)
(74) Representative: Nikolopoulou, Sofia
(86) International application number: PCT/EP2007/059423
(87) International publication number: WO 2008/028969

(56) References cited:
- GB-A- 2 251 046
- US-B1- 6 481 759

## Description

### Technical Field

The present invention relates to the field of connecting tube elements and similar components in ventilation duct systems.

### Background Art

During the recent decades, designers of ventilation duct systems have tried to find effective methods of connecting tube elements and similar components included in such systems.

In a widely used method, an inner tube is inserted into an outer tube and fastening means (screws or rivets) are driven through the overlapping tube wall section. Normally, the tubes are helically-wound lock-seam, tubes of sheet metal. Often, the installer or filter has to drill holes through the tube walls for the fastening means. This tube connection is cumbersome, time-consuming and requires special tools, as electric drills, screw drivers, riveting machines, etc. Furthermore, the fastening means project into the duct which may disturb the air flow and also cause air leakage, undesired accumulation of dust, etc. There is also a risk that the projections into the duct interfere with and damage cleaning equipment, such as brushes, which is pushed through the duct.

In other tube connecting methods, the tube ends are provided with end beads which are disposed end-to-end and clamped by means of special external clamping devices (see for instance US-A-6,030,005 and WO-A-05/001323). In certain applications, these methods work well but a disadvantage is that the fitter has to handle separate parts, such as clamping devices, coupling rings, etc.

Still another known tube connecting method is known from CH-A-496,927 which, however, also requires a separate and structurally complicated coupling member between the tube ends.

EP-A-797,038 discloses a tube connecting method where both tube walls are provided with a plurality of interlocking cuts which are cut through the material. The close hook-like cuts have the disadvantage of weakening the tube walls. The intermittent cuts constitute kerfs which may cause undesired longitudinal slots in the thin tube wall. It is also hard to provide precise cuts in the thin tube wall for establishing the locking effect. Furthermore, it is difficult to bring the cuts into matching positions since the tubes have to be precisely orientated. In practice, the cut portions do not flex back after insertion which means that the aimed-at engagement by the cuts is not achieved. Another drawback is that the risk of air leakage at the cuts is relatively high.

A similar prior-art tube connection is known from the Swedish patent application SE 0402011-1 which discloses an outer tube provided with hook-like cuts cut through the tube wall. The cuts are intended to engage shoulders on the outside of an inner tube inserted in the outer tube. The cuts are cut at the free end of the outer tube thereby weakening the same, and the engagement between the cuts and the shoulders is spaced from the free end of the inner tube. This prior-art tube connection has basically the same disadvantages as the tube connection of EP-A-797,038.

Document GB 2251046 shows an arrangement for connecting tube elements comprising the features of the preamble of claim 1.

Hence, there is need for a new type of tube connection for ventilation duct systems.

### Summary of the Invention

An object of the present invention is to provide an improved technique for connecting tube elements in a ventilation duct system.

This and other objects of the invention, which will appear from the following description, have now been achieved by an arrangement, a method, use and ventilation components as defined in the appended independent claims. Preferred embodiments and variants of the invention are defined in the appended subclaims.

In the arrangement of the invention, the inner tube element is provided with first coupling means for engaging corresponding second coupling means on the inside of the outer tube element, wherein at least one of the first and second coupling is continuous about substantially the entire circumference of the associated tube element. Thereby, a quick and easy connection of the tube elements can be achieved. No extra tools or separate parts are required, and the fitter does not have to bring complicated cuts into specific positions for connection.

Furthermore, the first coupling means is provided in an end portion of the inner tube element which facilitates insertion and connection. The engagement between the tube elements - by means of the coupling means - is established at a distance from the free end of the outer tube where the stiffness of the same enhances the stability of the connection.

Preferably, the first coupling means is continuous about the circumference of the inner tube element. Such a coupling means is easy to form on a tube element and thereby advantageous with respect to effective manufacturing. Furthermore, it is easy to establish engagement with the matching coupling means of the outer tube element, irrespective of the shape of the matching coupling means. Thanks to the continuous first coupling means, the inner tube elements can be rotated to any desired angular position without jeopardizing the engagement and the connection.

According to the invention, the free end of the end portion of the inner tube element is bent outwards and backwards for forming the first abutment, wherein the bent end preferably is continuous around the circumference of the end portion. By this structure, an abutment of the first coupling means of the inner tube element is achieved in a very simple and effective manner. The bent free end provides a sharp engagement edge and also an advantageous reinforcement of the end of the inner tube element thereby enhancing the stiffness and stability of the connection.

Preferably, the second coupling means of the outer tube element comprises depressions formed in the tube wall and angularly spaced with respect to the circumference of the outer tube element. During insertion, these depressions ride ever the bent free end of the inner tube element and thereby deform the tube wall of the outer tube element to a non-circular cross-section. This deformation in the engagement between the depressions and the bent free end enhance smooth insertion and secure snap connection of the tube elements.

In an embodiment, the inner tube coupling means has at least one first abutment which is substantially perpendicular to the direction of insertion, and the outer tube coupling means has at least one second abutment which is substantially perpendicular to the direction of insertion. Such co-operatsng abutments provide a secure connection which prevents the inner tube element from being pulled out of the outer tube element after connection and vice versa.

In another embodiment, the coupling means of the outer tube element comprises a number of abutment edges which are angularly spaced with respect to the circumference of the outer tube element. Alternatively, a continuous recess is formed around the circumference of the outer tube clement. Abutments of this kind are easy to provide in manufacture which is an advantage.

The abutments of the outer tube element may comprise a recess which engages with the abutment of the inner tube element formed on a circumferential shoulder in the end portion of the tube element. This type of abutments enhance secure engagement and are convenient to form on the tube waits.

Preferably, the inner tube element comprises a circumferential groove in which is mounted a circumferential sealing ring for sealing against the inside of the outer tube element. This enables a favourable sealing of the joint between the two tube elements is secured.

In an embodiment, the sealing ring is mounted in a groove by clamping a bent end of the inner tube element on a portion of the sealing ring, said bent end comprising said first coupling means. This constitutes a favourable fastening of the sealing ring which suits the connection concept well.

The tube connection method of the invention comprises the steps of partially inserting the inner tube element into the outer tube element to a close fit, and establishing engagement between coupling means of the inner and outer tube elements, respectively, for providing connection of the tube elements. Preferably, a bent free end of the inner tube element is snapped into engagement with matching coupling means on the inside of the outer tube element. It is also preferred that depressions of the outer tube element - during insertion - ride over the bent free end of the inner tube element and thereby deform the tube wall of the outer tube element to a non-circular cross-section. By these steps performed during insertion, a secure connection of the tube elements is achieved with a close fit. The tube elements are "clicked" in place.

Further advantages of the invention and its embodiments will appear in the following description.

### Brief Description of the Drawings

The invention will now be described further with reference to the accompanying drawings which show non-limiting embodiments and variants.
Figs 1-6 show a tube connection according to a first embodiment of the invention.
Figs 7-10 show assembly of tubes elements of the first embodiment.
Figs 11-12 show coupling means provided on the outer tube element of the first embodiment.
Figs 13-16 show alternative coupling means provided on the outer tube element.
Figs 17-20 show a tube connection according to a second embodiment of the invention.
Figs 21-24 show a tube connection according to a third embodiment of the invention.
Figs 25-28 show a tube connection according to a fourth embodiment of the invention.
Figs 29-32 show a tube connection according to a fifth embodiment of the invention.
Figs 33-36 show a tube connection according to a sixth embodiment of the invention.
Figs 37-40 show a tube connection according to a seventh embodiment of the invention without sealing ring.
Figs 41-42 show a variant with dual coupling means on the outer tube element.
Figs 43-44 show a variant of the first embodiment shown in Figs 5-6.
Figs 45 shows another variant of the first embodiment with alternative coupling means on the outer tube element.
Figs 46-47 show still another variant of the first embodiment with additional coupling means in the overlap portion of the tube elements.
Figs 48-52 illustrate schematically the insertion steps of the tube connection of the first embodiment with four depressions on the outer tube element.
Fig. 53 shows a stiffening bead of a large-diameter outer tube element.

### Description of Embodiments

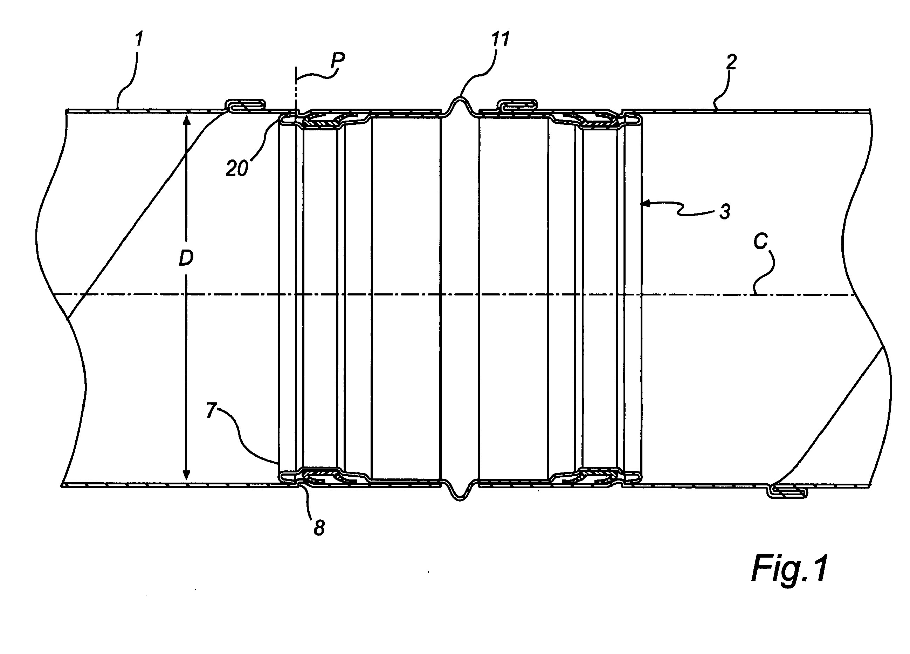

With reference to Figs 1-12, a basic version of this invention is described. Fig. 1 shows how a tube element or tube 1 is connected to another tube element or tube 2 by means of an intermediate tube element 3 in the shape of a connector member. The tubes 1, 2 are circular ventilation ducts included in a ventilation duct system, and the tube element 3 is in this example a so-called connector of sheet metal (for instance of the type "NPU" marketed by the applicant Lindab AB). Preferably, the tube elements 1, 2 are helically-wound lock-seam tubes of sheet metal having a wall thickness from about 0,5 mm to about 1,25 mm depending on the diameter (D) of the tubes. The inventive concept is in particular applicable to ventilation ducts within the diameter range 80 - 315 mm, but it can also be used for much larger diameters like 1 600 mm.

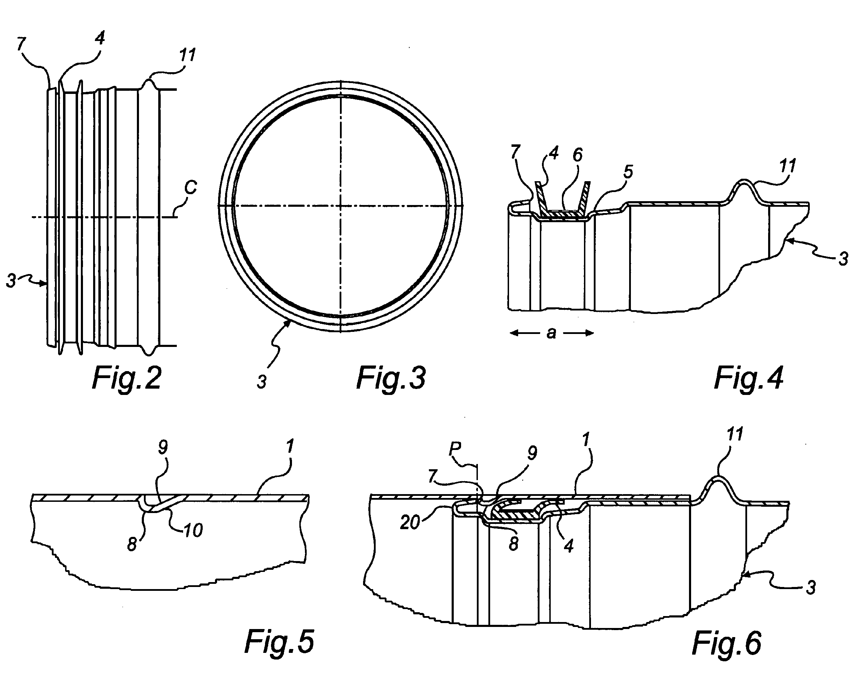

Fig. 2 is a side view of a connecting portion of the connector 3 and Fig. 3 is an end view thereof. Fig. 4 is a sectional view of the connector 3, Fig. 5 is a sectional view of the outer tube 1 and Fig. 6 is a sectional view of the tube connection of Fig. 1. Further embodiments to be described in the following will be presented in similar views.

In each end portion (a), the connector 3 has a two-lip sealing ring 4 of rubber which preferably is of the type "UndabSare®" marketed by the applicant Lindab AB. The sealing ring 4 is mounted in a circumferential groove 5 of the connector 3 and tightened by a circumferential strap 6 (see Fig. 4).

As is shown in Figs 1 and 7-10, the tubes 1, 2 are connected by the connector 3. Hence, a connection or joint is provided at each overlapping interface between the connector 3 and the tubes 1,2. The inner tube element (the connector 3) is partially inserted with a close fit into the outer tubes 1, 2.

For obtaining a secure connection between the connector 3 and each tube the tubes 1, 2 and the connector 3 are provided with matching coupling means for mutual engagement.

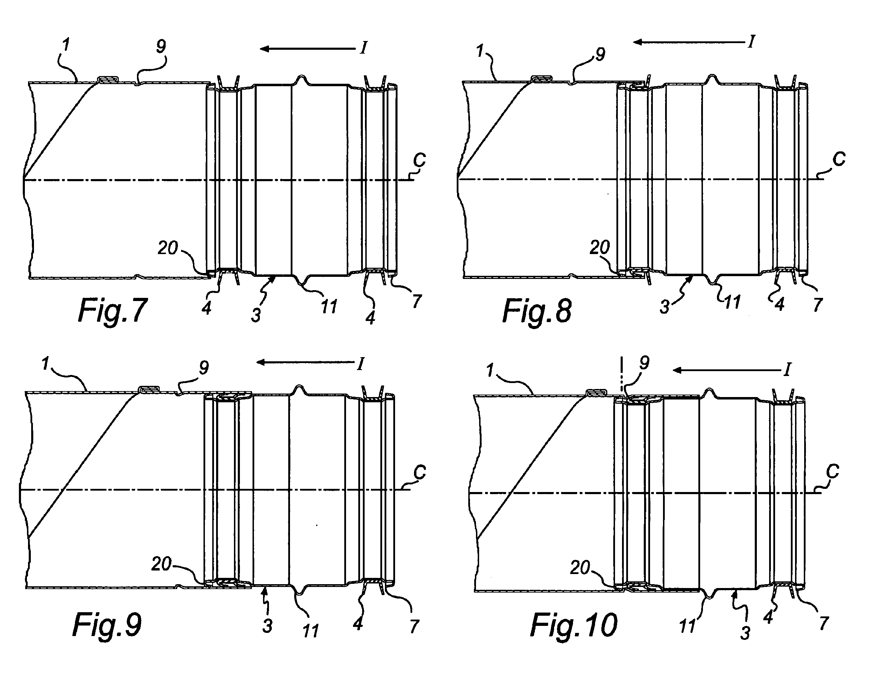

Thus, each end portion of the connector 3 has an abutment 7 formed by the free end 20 of the connector 3 which is bent outwards and backwards. The abutment 7 has an abutment surface or edge which is substantially perpendicular to the axial direction of insertion (arrow 1 in Fig. 7) and to the centre axis C of connector 3. In this embodiment, the abutment 7 is continuous about the entire circumference of the connector 3 but variants are feasible (to be described below). The abutment 7 forms the coupling means of the connector 3. The continuous bent end of the connector 3, which comprises the abutment 7, forms an end bead 20 of the connector 3.

The outer tube 1 has at least one abutment 8 formed in the tube wall for engagement with the abutment 7 of the connector 3. In the basic embodiment, the abutment 8 is formed by a number of spaced depressions or recesses 9 in the tube wall about the circumference of the tube 1. The recesses 9 do not go through the tube wall, so there is no risk of air leakage. The abutment 8 has an abutment surface or edge which is substantially perpendicular to the axial direction of insertion I and to the centre axis C of the tube 1. The abutment 8 forms the coupling means of the outer tube 1.

For connection, the connector 3 is inserted into the tube 1 and the mutual coupling and engagement means 7 and 8 are operable to secure the connection. As can be seen in Fig. 6, the coupling means of the inner tube 3 has been moved past the coupling means of the outer tube 1 and a connection has been established after insertion. The coupling means are interlocked in a locked position. The abutments 7, 8 are snapped to this position and establish the locking structure and function. For facilitating the engagement, each recess 9 defines a ramp surface 10 on the inside of the tube 1.

An outer circumferential bead 11 of the connector 3 provides an external abutment or stop for the free ends of the two tubes 1, 2 to be connected with the connector 3. Hence, the bead 11 determines the martial insertion of the connector 3 in the tubes 1 and 2 (see Fig. 1).

The mutual engagement between the abutments 7 and 8 is established in a plane P which is perpendicular to the direction of insertion I (Figs 1, 6 and 10).

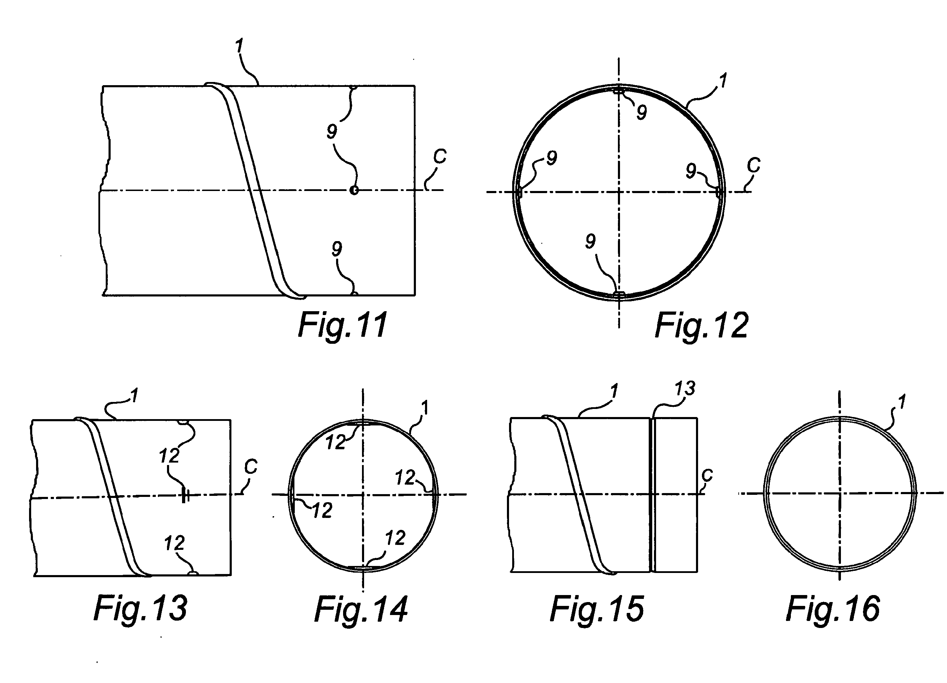

Figs 11-12 show how the depressions 9 are formed in the tube wall. In this example, there are four depressions 9 projecting inwardly towards the centre axis C of the tube 1. The angular spacing between the depressions 9 is about 90 degrees. During insertion, the depressions 9 are brought into engagement with the continuous abutment 7 of the connector 3. Preferably, the number of depressions 9 and their size (depth) are adapted to the diameter of the tube.

Figs 13-14 show a slightly modified variant where the spaced depressions 12 have an extension in the circumferential direction of the tube 1. Each depression 12 forms a "straight" portion on the inside of the tube 1. In a variant (not shown), the depressions 12 can have a radius or curvature corresponding to the radius or curvature of the cuter tube 1.

The number of depressions 9 or 12 is not crucial as long as they form adequate abutments 8 for engagement with the continuous abutment 7 of the of the inner tube, that is the connector 3.

In Figs 15-16, the coupling means of the outer tube 1 is formed by a continuous circumferential groove or recess 13 about the entire circumference of the outer tube 1. Preferably, this continuous coupling groove 13 co-operates with an intermittent coupling abutment on the outside of the connector 3 (not shown).

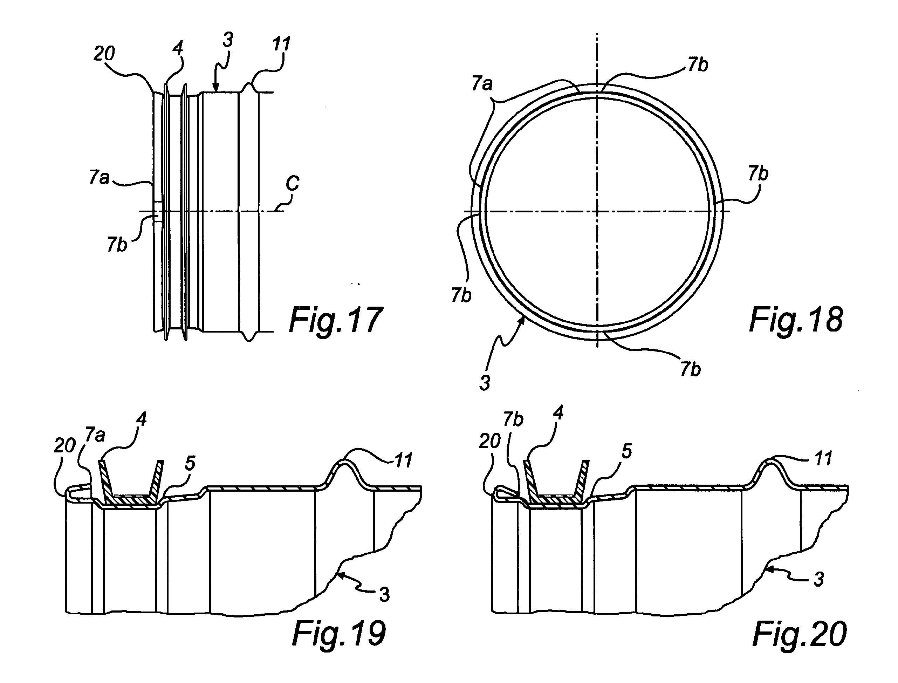

The abutment 7 of the inner tube or connector 3 does not have to be entirely continuous, but it can also comprise abutments edge portions 7a which form arcs of a circle and which are distributed about the circumference of the connector 3. Such an embodiment is disclosed in Figs 17-20. The free end 20 of the connector 3 is bent outwards and backwards as shown in the section of Fig. 19 taken along section line A-A in the end view of Fig. 18. In four spaced positions along the circumference of the end bead 20, the bent end is somewhat "closed" for forming four edge portions 7b with about 90 degrees angular spacing (see section of Fig. 20 taken along section line B-B in the end view of Fig. 18).

An advantage with this embodiment is that the tube elements can be dismounted by rotation of the connector 3, so that the depressions 9 are aligned with the "closed" edge portions 7b, enabling the fitter to pull the connector 3 out of the tube 1.

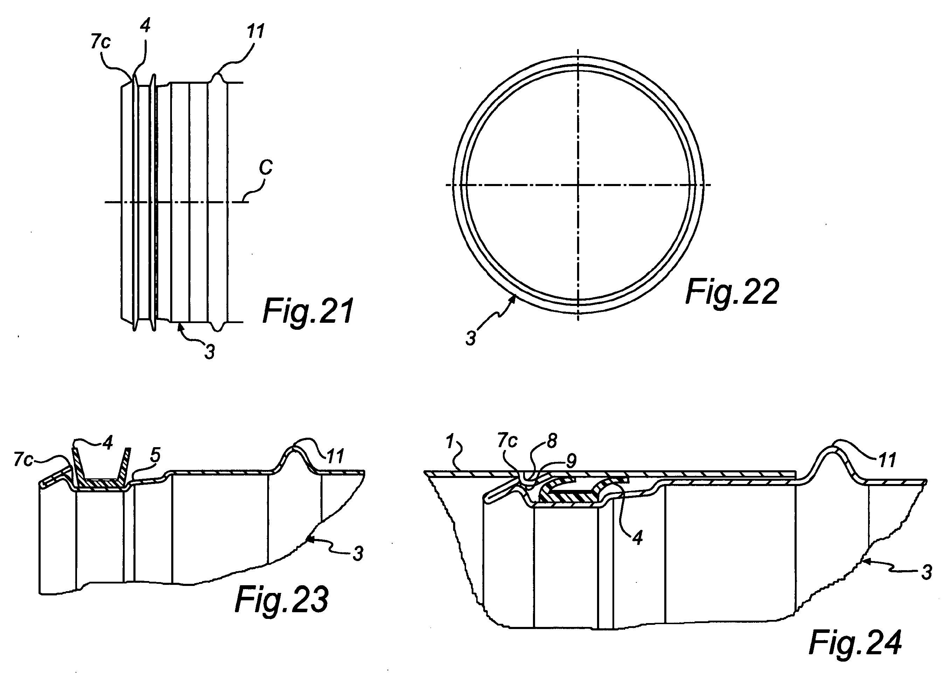

Figs 21-24 show an embodiment where the end bead of the connector 3 has a modified structure, that is "closed" along the entire circumference. The advantage with this embodiment is that the free end of the connector 3 is conical which promotes easy insertion. Preferably, the abutment 7c is continuous along the entire circumference of the connector 3.

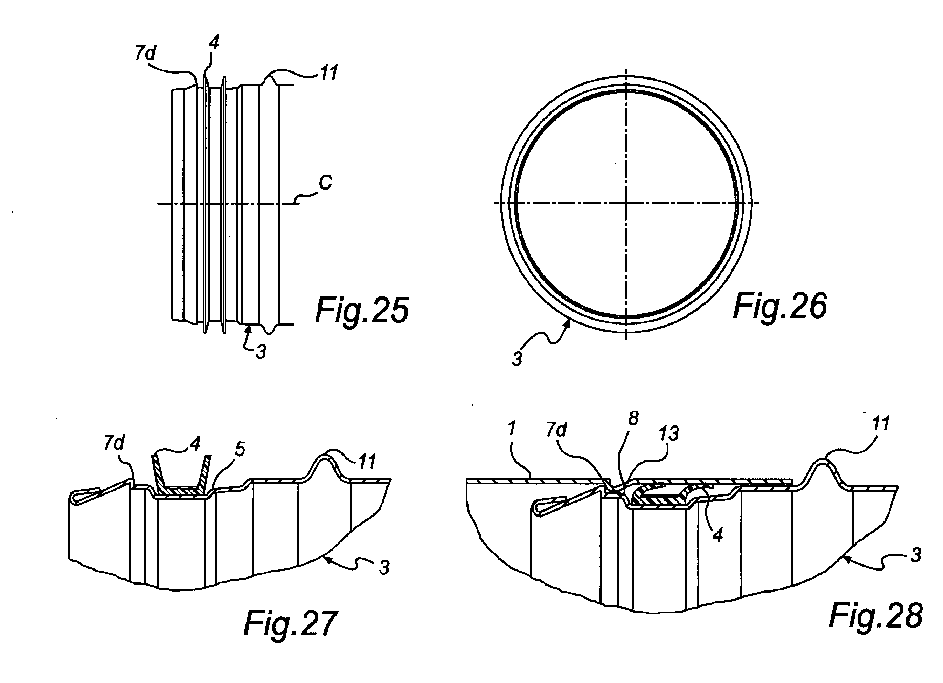

A further embodiment is shown in Figs 25-28 where the abutment of the inner tube or connector 3 is shaped as a continuous circumferential shoulder 7d extending radially outwards from the outside of the connector wall adjacent to the groove 5 in which the sealing ring 4 is mounted. This embodiment has the advantage that the abutment shoulder 7d is rather easy to produce in standard production equipment. Further, the conical end of the connector 3 promotes easy insertion and a snap locking effect between the matching coupling means. Preferably, the outer tube 1 of this embodiment has a contiguous groove or recess 13 for engagement with the continuous shoulder 7d of the connector 3 (cf. also Figs 15-16).

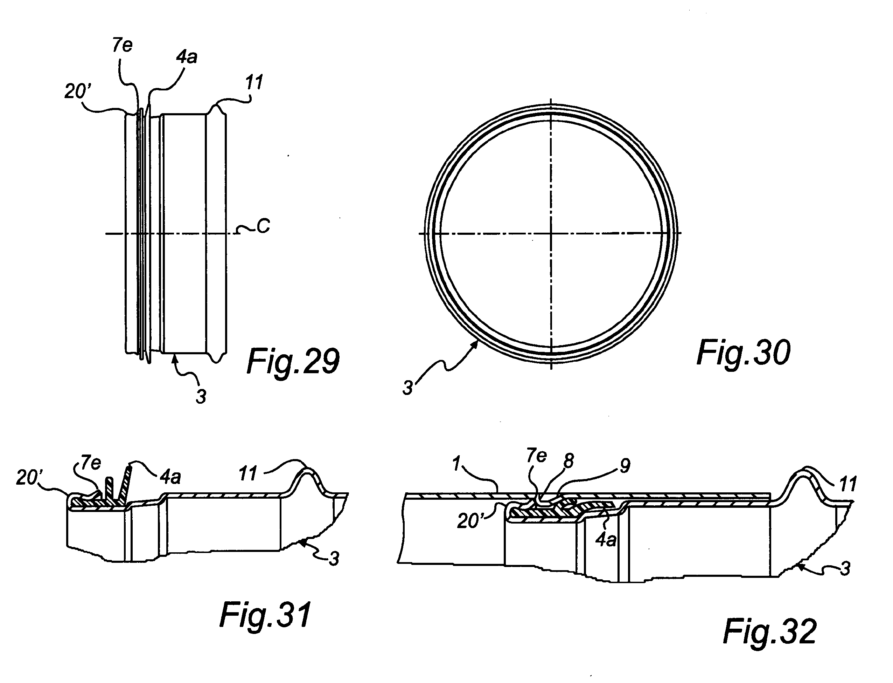

The embodiment of Figs 29-32 has a modified sealing ring 4a which is clamped by the bent free end 20' of the connector 3. As described before, the abutment 7e of the connector 3 is brought into engagement with the abutment 8 of the outer tube 1. The bent end 20' of the connector 3 has two functions: it provides for fastening the sealing ring 4a and it defines the inner coupling means for the tube connection. The sealing ring 4a can be of the type described in the pamphlet "SPIRO® System" issued by Spiro International S.A. (1999).

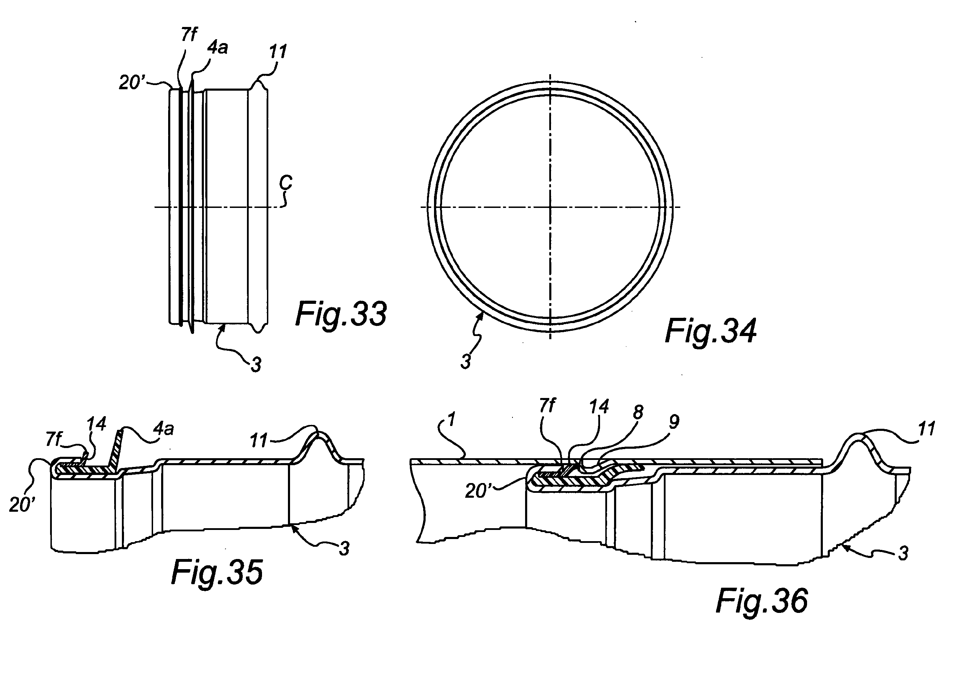

In still another embodiment shown in Figs 33-36, the free end 20' of the connector 3 is also bent outwards and backwards for fastening the sealing ring 4a. In this case, however, a continuous circumferential member 14, for instance of resilient sheet metal, is clamped between the bent connector end 20' and a fastening portion of the sealing ring 4a. The radially projecting portion of the member 14 provides an abutment 7f for engagement with the matching abutment 8 of the recess 9 of the outer tube 1. The additional member 14 also provides a secure clamping of the sealing ring 4a.

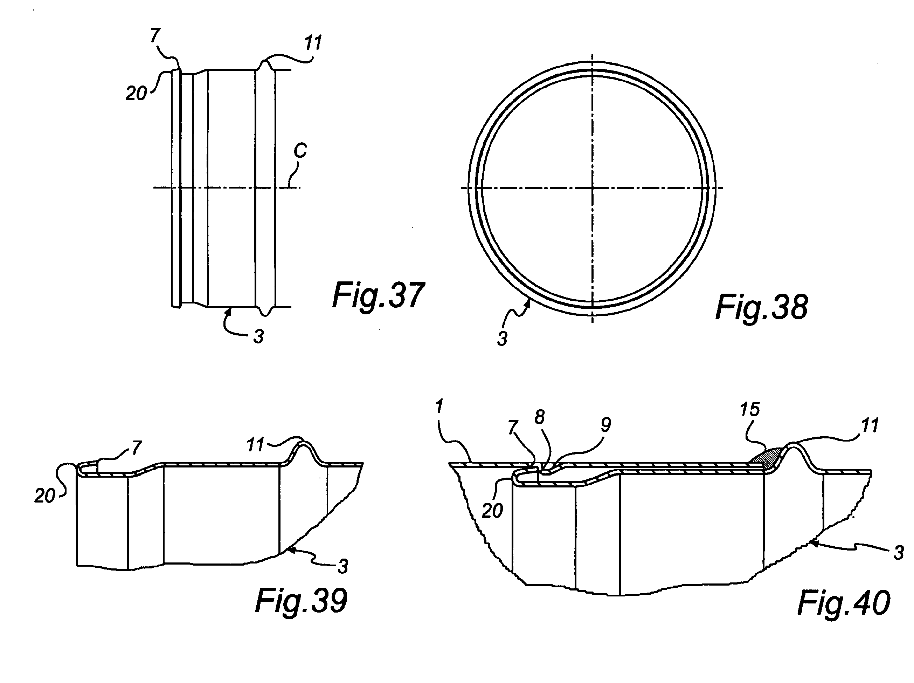

An embodiment without a sealing ring is shown in Figs. 37-40. The connection of the outer tube 1 and the inner tube or connector 3 is the same as described above, in particular with respect to Figs 1-12. In order to avoid air leakage in the joint between the two tube elements, a stealing mastic or tape 15 can be applied in the circumferential interface or outer joint between the tubes 1, 3. The mutual coupling means - that is the abutments 7, 8 to be engaged during insertion - are basically the same as in the embodiments earlier discussed.

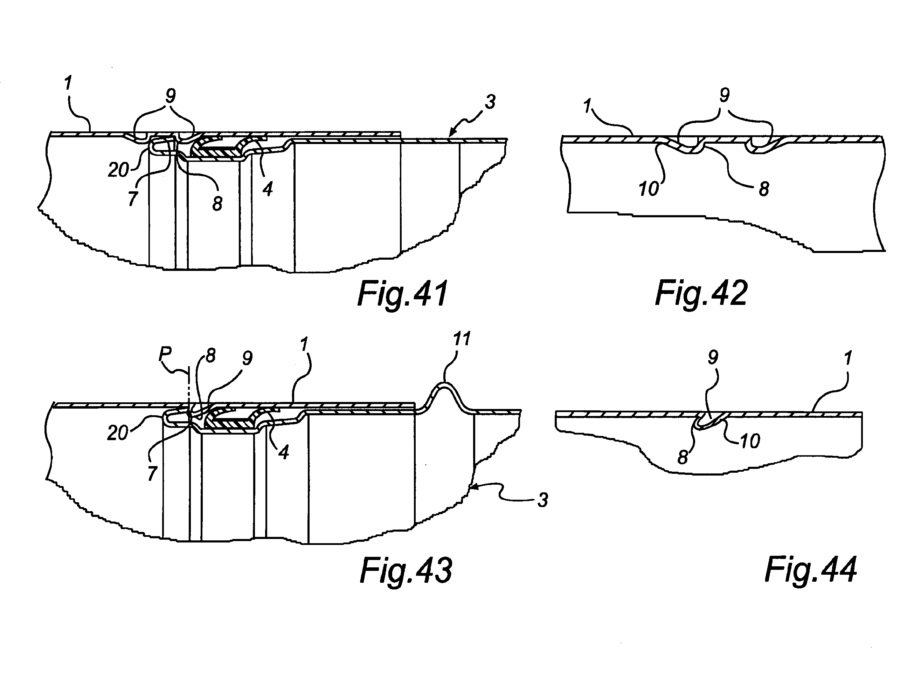

Figs 41-42 show an embodiment where two recesses 9 are provided at an axial distance with respect to the outer tube 1. Hence, these dual recesses 9 constitute the inner coupling means of the outer tube 1. The end bead 20 of the connector 3, including the abutment 7, is trapped between the two recesses 9. By this structure, the circumferential stop bead 11 of the outer tube (earlier described) can be omitted.

A variant of the basic version of Figs 5-6 is shown in Figs 43-44, according to which each depression forming part of the coupling means 8 of the outer tube 1 is formed in such a way that the abutment 8 forms an acute angle for engagement with the matching abutment 7 on the bent end 20 of the connector 3. These "hook-like" depressions 9 secure a very reliable engagement and coupling of the abutments 7, 8 of the tube elements 1 and 3.

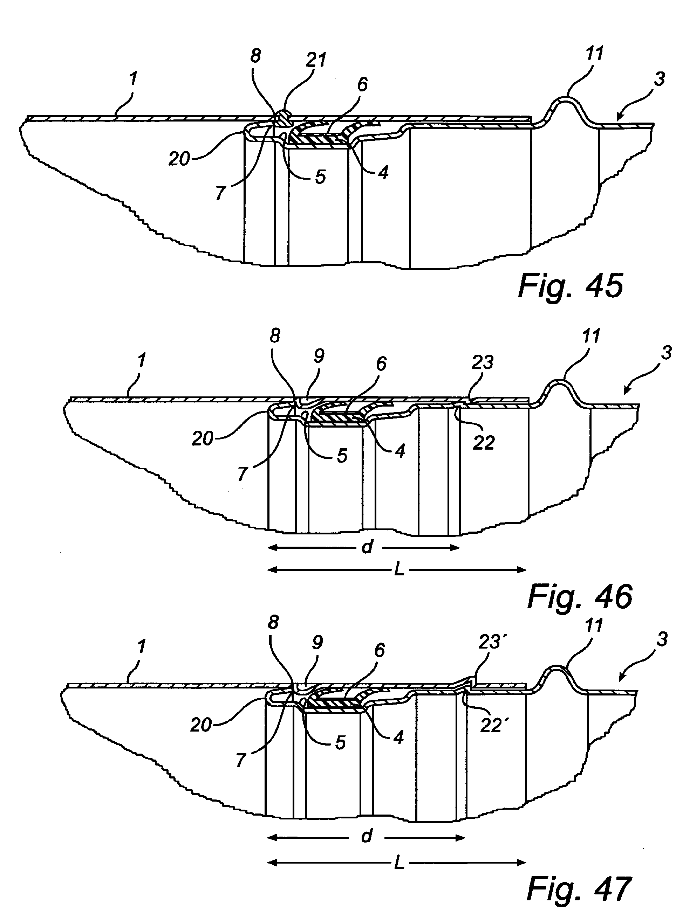

Fig. 45 shows another variant of the basic version of Figs 5-6 where rivets 21 are driven through the outer tube 1 and form the coupling means 8 of the outer tube 1. The rivets 21, which are angularly spaced along the circumference of the outer tube 1, are in engagement with the abutment 7 of the bent end 20 of the connector 3.

An embodiment with two axially spaced coupling portions is illustrated in Figs 46-47. The first coupling in the end portion of the connector 3 is established by the engagement between the abutment 7 of the bent free end 20 of the connector 3 and the matching abutments 8 formed by the spaced depressions 9 of the outer tube 1. The second coupling is established by further coupling means 22 which are formed on the outside of the connector 3 and which match corresponding coupling means 23 formed on the inside of the outer tube 1.

The connector coupling means 22 are provided at a distance (d) from the free end 20 of the connector 3. Preferably, either of these coupling means 22, 23 comprise spaced depressions which co-operate with a continuous abutment forming the matching coupling means. This embodiment is in particular suitable for large-diameter ventilation ducts which may "flex" in the overlapping connection. The combined coupling effect in two axially spaced engagement portions provides a secure tube connection which reduces the "flexing" in the joint between the tubes.

Practical tests with the embodiments of Figs 46-47 have shown that there are favourable ratios between said distance (d) and the nominal diameter (D) of the inner tube or connector 3. Secure and reliable tube connections are achieved if this ratio (d/D) is within the approximate range 7-38%, preferably about 10-35% and moist preferred about 14-30%. Another relevant parameter is the ratio between said distance (d) and the insertion length (L). Preferably, this ratio (d/L) should be within the range 50-85%, preferably about 70-80CA% depending on the diameter of the tubes. If this ratio between the distance (d) and the insertion length (L) is used, a favourable snap locking effekt is achieved and a very reliable tube connection,

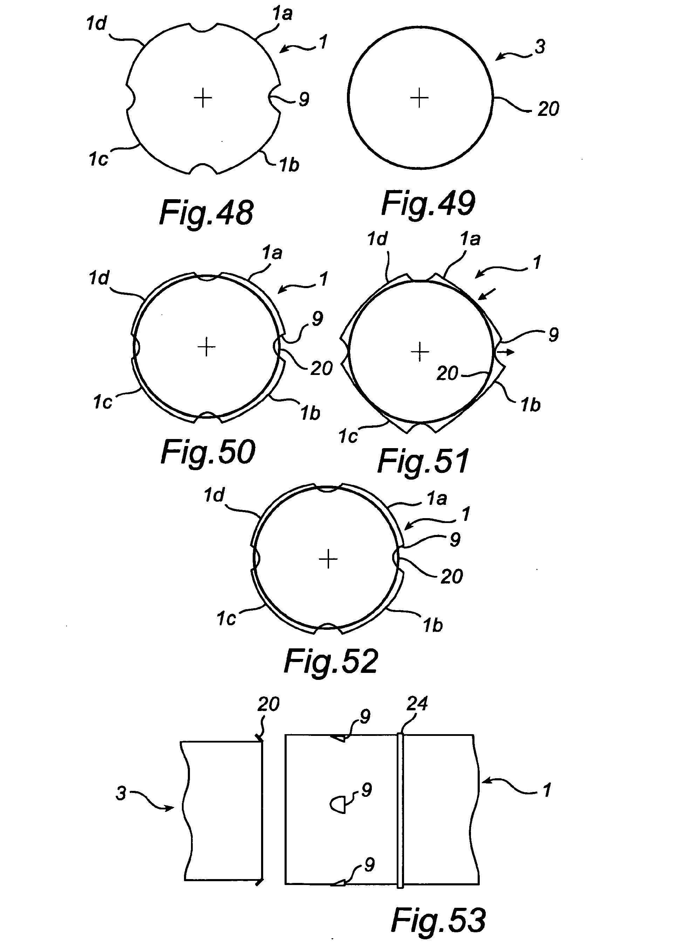

Fig. 48 is a schematic cross-section of the outer tube element 1 of Fig. 12 with four depressions 9 (which are shown exaggerated), whereas Fig, 49 is a schematic end view of the inner tube connector 3 with the bent free end 20. During the initial insertion, the tube elements 1, 3 have the cross-sectional shape shown in Fig. 50. After further insertion, the depressions 9 ride over the periphery of the bent free end 20 of the connector 3, and the outer tube 1 now has a non-circular cross-section; more like a substantially square cross-section (exaggerated in the figures). The depressions 9 are pressed outwards and the tube wall portions 1a, 1b, 1c and 1d - between the depressions 9 - are pressed inwards with respect to the centre axis of the tube elements 1,3 (see arrows). This deformation of the tube wall of the outer tube 1 - due to the angularly spaced depressions 9 riding over and passing the bent free end 20 of the connector 3 - provides a snap fit and a secure connection of the tubular elements 1, 3.

The schematic embodiment of Fig. 53 is in particular applicable to large-diameter ventilation ducts which - due to the diameter - may be somewhat "weak" in the end portion, which in turn may jeopardize secure connection of the tube elements 3. 2. The inner tube or connector 3 is the same as described above and it has a bent free end 20. At a distance from the free end of the outer tube 2 there is a circumferential continuous bead 24 which serves to enhance the stiffness of the outer tube 2 close to the connection portion. As described above, the outer tube 2 has a number of depressions 9 formed in the tube wall for engagement with the abutment of the bent free end 20 of the connector 3.

Although this description only has discussed tube elements circular cross section, it should be mentioned that the inventive concept is applicable also to tubes and ventilation ducts of different cross sections, such as flat-oval, rectangular, etc. The coupling means of the tubes are designed in a corresponding manner. A common feature of all embodiments of the invention is that the tube coupling means and abutments are configured in such a way that no open cuts or apertures are left in the tube walls which could plead to air leakage.

It should be emphasised that the inventive concept is not limited to the embodiments described here, and that modifications are feasible without departing from the scope of the invention defined in the appended claims. For instance, the number of abutment edges can vary. Furthermore, the inner tube can be other than a connector, for instance a bend, a T-piece, a silencer, etc,

## Claims

1. An arrangement for connecting tube elements of a ventilation duct system, comprising an inner tube element (3) which is configured to be partially and with a close fit inserted into and connected with an outer tube element (1), wherein the inner tube element (3) comprises external first coupling means (7) for engagement with corresponding second coupling means (8) provided on the inside of the outer tube element (1), the engagement between said first and second coupling means (7, 8) providing said connection of the tube elements (1, 3) after insertion, and said engagement occurring in a plane (P) substantially perpendicular to the direction of insertion (I), wherein at least one of said first and second coupling means (7, 8) extends along substantially the entire circumference of the associated tube element and wherein said first coupling means (7) is provided in an end portion (a) of the inner tube element (3), **characterized in that** the free end (20) of said end portion (a) of the inner tube element (3) is bent outwards and backwards for forming said first coupling means (7).

2. An arrangement as claimed in claim 1, wherein said first coupling means (7) is continuous along the circumference of the inner tube element (3).

3. An arrangement as claimed in claim 1, wherein said bent free end (20) is continuous along the circumference of said end portion (a).

4. An arrangement as claimed in any one of claims 2-3, wherein said second coupling means (8) of the outer tube element (1) comprises depressions (9) formed in the tube wall and angularly spaced with respect to the circumference of the outer tube element (1).

5. An arrangement as claimed in any one of the preceding claims, wherein said first coupling means comprises at least one first abutment (7; 7a-f) which is substantially perpendicular to the direction of insertion and wherein said second coupling means comprises at least one second abutment (8; 8a-c) which is substantially perpendicular to the direction of insertion, said abutments co-operating for securing said connection.

6. An arrangement as claimed in claim 5, wherein said second coupling means (8) comprises a plurality of abutment edges (12) which are angularly spaced with respect to the circumference of the outer tube element (1).

7. An arrangement as claimed in claims 5 or 6, wherein said outer tube element (1) comprises a circumferential recess (13) defining the second abutment (8) which is continuous along the circumference of the outer tube element (1).

8. An arrangement as claimed in any one of claims 5-7, wherein said first abutment (7) is formed on a circumferential shoulder (7d) provided on the outside of the inner tube element (3) in the end portion (a) thereof.

9. An arrangement as claimed in any one of the preceding claims, wherein the inner tube element (3) comprises a circumferential groove (5) in which is mounted a circumferential sealing ring (4; 4a) for sealing against the inside of the outer tube element (1).

10. An arrangement as claimed in claim 9, wherein the sealing ring (4a) is mounted in the groove (5) by clamping a bent end (20') of the inner tube element (3) on a portion of the sealing ring (4a), said bent end (20) comprising said first coupling means (7e-f).

11. An arrangement as claimed in any one of the preceding claims, wherein the inner tube element (3) comprises means (11) configured to be engaged by the free end of the outer tube element (1 ) for determining said partial insertion.

12. An arrangement as claimed in any one of the preceding claims, wherein the inner tube element (3) comprises further outer coupling means (22) at a distance (d) from said end portion of the inner tube element (3), said further coupling means (22) being configured to engage with further inner coupling means (23) of the outer tube element (1).

13. An arrangement as claimed in any one of the preceding claims, wherein the outer tube element is a helically-wound lock-seam tube (1) of sheet metal, and wherein the inner tube element (3) is of sheet metal as well.

14. An arrangement as claimed in claim 13, wherein the inner tube element is a connector (3).

15. A ventilation fitting to be used as an inner tube element in the arrangement as claimed in anyone of claims 1-14, wherein the ventilation fitting comprises said first coupling means.

16. A ventilation duct to be used as an outer tube element in the arrangement as claimed in anyone of claims 1-14, wherein the ventilation duct comprises said second coupling means.

17. A ventilation duct system, comprising at least one tube connection arrangement as claimed in anyone of claims 1-14.

18. Use of an arrangement as claimed in any one of claims 1-14 for connecting tube elements, ducts and/or fittings included in a ventilation duct system.

19. A method for connecting tube elements of a ventilation duct system by a tube connecting arrangement as claimed in any one of claims 1-14, composing the steps of:
a) partially inserting an inner tube element info an outer tube element to a close fit, and
b) establishing engagement between coupling means of the inner and outer tube elements, respectively, for providing said connection of the tube elements.

20. A method as claimed in claim 19 when dependent on claims 1 or 3, wherein a bent free end of the inner tube element is snapped into engagement with corresponding coupling means on the inside of the outer tube element.

21. A method as claimed in claim 20 when dependent on claim 4, wherein said depressions of the outer tube element - during insertion - ride over said bent free end of the inner tube element and thereby deform the tube wall of the outer tube element to a non-circular cross-section.

## Patentansprüche

1. Anordnung zur Verbindung von Röhrenelementen eines Belüftungskanalsystems mit einem inneren Röhrenelement (3), das so konfiguriert ist, dass es teilweise und mit enger Passung in ein äußeres Röhrenelement (1) eingeführt und mit diesem verbunden ist, wobei das innere Röhrenelement (3) ein äußeres erstes Koppelmittel (7) zum Eingriff mit einem entsprechenden zweiten Koppelmittel (8), das im Inneren des äußeren Röhrenelements (1) vorgesehen ist, umfasst, wobei der Eingriff zwischen dem ersten und dem zweiten Koppelmittel (7, 8) für die Verbindung der Röhrenelemente (1, 3) nach dem Einführen sorgt und der Eingriff in einer im Wesentlichen senkrecht zur Einführrichtung (I) verlaufenden Ebene (P) erfolgt, wobei sich das erste und/oder das zweite Koppelmittel (7, 8) entlang im Wesentlichen dem gesamten Umfang des zugeordneten Röhrenelements erstreckt und wobei das erste Koppelmittel (7) in einem Endabschnitt (a) des inneren Röhrenelements (3) vorgesehen ist, **dadurch gekennzeichnet, dass** das freie Ende (20) des Endabschnitts (a) des inneren Röhrenelements (3) zum Bilden des ersten Koppelmittels (7) nach außen und hinten gebogen ist.

2. Anordnung nach Anspruch 1, wobei das erste Koppelmittel (7) entlang dem Umfang des inneren Röhrenelements (3) durchgehend ist.

3. Anordnung nach Anspruch 1, wobei das gebogene freie Ende (20) entlang dem Umfang des Endabschnitts (a) durchgehend ist.

4. Anordnung nach Anspruch 2 oder 3, wobei das zweite Koppelmittel (8) des äußeren Röhrenelements (1) Mulden (9) umfasst, die in der Röhrenwand ausgebildet und bezüglich des Umfangs des äußeren Röhrenelements (1) winkelmäßig beabstandet sind.

5. Anordnung nach einem der vorhergehenden Ansprüche, wobei das erste Koppelmittel mindestens einen ersten Anschlag (7; 7a - f) umfasst, der im Wesentlichen senkrecht zur Einführrichtung verläuft, und wobei das zweite Koppelmittel mindestens einen zweiten Anschlag (8; 8a - c) umfasst, der im Wesentlichen senkrecht zur Einführrichtung verläuft, wobei die Anschläge zur Befestigung der Verbindung zusammenwirken.

6. Anordnung nach Anspruch 5, wobei das zweite Koppelmittel (8) mehrere Anschlagränder (12) umfasst, die bezüglich des Umfangs des äußeren Röhrenelements (1) winkelmäßig beabstandet sind.

7. Anordnung nach Anspruch 5 oder 6, wobei das äußere Röhrenelement (1) eine Umfangsaussparung (13) umfasst, die den zweiten Anschlag (8) definiert, der entlang dem Umfang des äußeren Röhrenelements (1) durchgehend ist.

8. Anordnung nach einem der Ansprüche 5 - 7, wobei der erste Anschlag (7) an einer Umfangsschulter (7d) ausgebildet ist, die außen am inneren Röhrenelement (3) in dem Endabschnitt (a) davon vorgesehen ist.

9. Anordnung nach einem der vorhergehenden Ansprüche, wobei das innere Röhrenelement (3) eine Umfangsnut (5) umfasst, in der ein Umfangsdichtring (4; 4a) zum Abdichten zum Inneren des äußeren Röhrenelements (1) hin montiert ist.

10. Anordnung nach Anspruch 9, wobei der Dichtring (4a) durch Klemmen eines gebogenen Endes (20') des inneren Röhrenelements (3) an einen Abschnitt des Dichtrings (4a) in der Nut (5) montiert ist, wobei das gebogene Ende (20) das erste Koppelmittel (7e - f) umfasst.

11. Anordnung nach einem der vorhergehenden Ansprüche, wobei das innere Röhrenelement (3) ein Mittel (11) umfasst, das so konfiguriert ist, dass es zum Bestimmen der Teileinführung vom freien Ende des äußeren Röhrenelements (1) in Eingriff genommen wird.

12. Anordnung nach einem der vorhergehenden Ansprüche, wobei das innere Röhrenelement (3) ein weiteres äußeres Koppelmittel (22) in einem Abstand (d) vom Endabschnitt des inneren Röhrenelements (3) umfasst, wobei das weitere Koppelmittel (22) so konfiguriert ist, dass es mit dem weiteren inneren Koppelmittel (23) des äußeren Röhrenelements (1) in Eingriff kommt.

13. Anordnung nach einem der vorhergehenden Ansprüche, wobei das äußere Röhrenelement eine spiralförmig gewundene Randfalz-Röhre (1) aus Blech ist und wobei auch das innere Röhrenelement (3) aus Blech ist.

14. Anordnung nach Anspruch 13, wobei das innere Röhrenelement ein Verbinder (3) ist.

15. Belüftungsarmatur, die als ein inneres Röhrenelement in der Anordnung nach einem der Ansprüche 1 - 14 zu verwenden ist, wobei die Belüftungsarmatur das erste Koppelmittel umfasst.

16. Belüftungskanal, der als ein äußeres Röhrenelement in der Anordnung nach einem der Ansprüche 1 - 14 zu verwenden ist, wobei der Belüftungskanal das zweite Koppelmittel umfasst.

17. Belüftungskanalsystem mit mindestens einer Röhrenverbindungsanordnung nach einem der Ansprüche 1 - 14.

18. Verwendung einer Anordnung nach einem der Ansprüche 1 - 14 zum Verbinden von Röhrenelementen, Kanälen und/oder Armaturen, die in einem Belüftungskanalsystem enthalten sind.

19. Verfahren zum Verbinden von Röhrenelementen eines Belüftungskanalsystems mittels einer Röhrenverbindungsanordnung nach einem der Ansprüche 1 - 14 mit folgenden Schritten:
a) ein inneres Röhrenelement wird mit enger Passung teilweise in ein äußeres Röhrenelement eingeführt und
b) ein Eingriff zwischen Koppelmitteln des jeweiligen inneren und äußeren Röhrenelements wird hergestellt, um für die Verbindung der Röhrenelemente zu sorgen.

20. Verfahren nach Anspruch 19, falls dieser von Anspruch 1 oder 3 abhängt, wobei ein gebogenes freies Ende des inneren Röhrenelements in Eingriff mit einem entsprechenden Koppelmittel im Inneren des äußeren Röhrenelements eingeschnappt wird.

21. Verfahren nach Anspruch 20, falls dieser von Anspruch 4 abhängig ist, wobei die Mulden des äußeren Röhrenelements beim Einführen über das gebogene freie Ende des inneren Röhrenelements fahren und **dadurch** die Röhrenwand des äußeren Röhrenelements zu einem nicht kreisförmigen Querschnitt deformieren.

## Revendications

1. Dispositif pour connecter des éléments tubulaires d'un système de conduit de ventilation, comprenant un élément tubulaire intérieur (3) qui est configuré de manière à être partiellement inséré, et avec un ajustement serré, dans et à être connecté avec un élément de tubulaire extérieur (1), dans lequel l'élément tubulaire intérieur (3) comprend des premiers moyens de couplage externes (7) conçus pour s'engager avec des deuxièmes moyens de couplage correspondants (8) prévus sur le côté intérieur de l'élément tubulaire extérieur (1), l'engagement entre lesdits premiers et deuxièmes moyens de couplage (7, 8) établissant ladite connexion des éléments tubulaires (1, 3) après l'insertion, et ledit engagement étant réalisé dans un plan (P) qui est sensiblement perpendiculaire à la direction d'insertion (I), dans lequel au moins un desdits premiers et deuxièmes moyens de couplage (7, 8) s'étendent le long sensiblement de la totalité de la circonférence de l'élément tubulaire associé, et dans lequel lesdits premiers moyens (7) sont prévus dans une partie d'extrémité (a) de l'élément tubulaire intérieur (3), **caractérisé en ce que** l'extrémité libre (20) de ladite partie d'extrémité (a) de l'élément de tube intérieur (3) est courbée vers l'extérieur et vers l'arrière de manière à former lesdits premiers moyens de couplage (7).

2. Dispositif selon la revendication 1, dans lequel lesdits premiers moyens de couplage (7) sont continus le long de la circonférence de l'élément tubulaire intérieur (3).

3. Dispositif selon la revendication 1, dans lequel ladite extrémité libre courbée (20) est continue le long de la circonférence de ladite partie d'extrémité (a).

4. Dispositif selon l'une quelconque des revendications 2 ou 3, dans lequel lesdits deuxièmes moyens de couplage (8) de l'élément tubulaire extérieur (1) comportent des creux (9) formés dans la paroi du tube et angulairement espacés par rapport à la circonférence de l'élément tubulaire extérieur (1).

5. Dispositif selon l'une quelconque des revendications précédentes, dans lequel lesdits premiers moyens de couplage comprennent au moins une première butée (7; 7a-f) qui est sensiblement perpendiculaire à la direction d'insertion, et dans lequel lesdits deuxièmes moyens de couplage comprennent au moins une deuxième butée (8; 8a-c) qui est sensiblement perpendiculaire à la direction d'insertion, lesdites butées coopérant pour fixer ladite connexion.

6. Dispositif selon la revendication 5, dans lequel lesdits deuxièmes moyens de couplage (8) comportent une pluralité de bords de butée (12) qui sont angulairement espacés par rapport à la circonférence de l'élément tubulaire extérieur (1).

7. Dispositif selon la revendication 5 ou 6, dans lequel ledit élément tubulaire extérieur (1) présente un évidement circonférentiel (13) qui définit la deuxième butée (8) et qui est continu le long de la circonférence de l'élément tubulaire extérieur (1).

8. Dispositif selon l'une quelconque des revendications 5 à 7, dans lequel ladite première butée (7) est formée sur un épaulement circonférentiel (7d) qui est prévu sur le côté extérieur de l'élément tubulaire intérieur (3) dans la partie d'extrémité (a) de celui-ci.

9. Dispositif selon l'une quelconque des revendications précédentes, dans lequel l'élément tubulaire intérieur (3) comporte une rainure circonférentielle (5) dans laquelle un anneau d'étanchéité circonférentiel (4; 4a) est monté dans le but de créer une isolation contre le côté intérieur de l'élément tubulaire extérieur (1).

10. Dispositif selon la revendication 9, dans lequel l'anneau d'étanchéité (4a) est monté dans la rainure (5) en serrant une extrémité courbée (20') de l'élément tubulaire intérieur (3) sur une partie de l'anneau d'étanchéité (4a), ladite extrémité courbée (20) comprenant lesdits premiers moyens de couplage (7e-f).

11. Dispositif selon l'une quelconque des revendications précédentes, dans lequel l'élément tubulaire intérieur (3) comprend des moyens (11) configurés de manière à être engagés par l'extrémité libre de l'élément tubulaire extérieur (1) afin de déterminer ladite insertion partielle.

12. Dispositif selon l'une quelconque des revendications précédentes, dans lequel l'élément tubulaire intérieur (3) comprend des moyens de couplage extérieurs supplémentaires (22) situés à une distance (d) de ladite partie d'extrémité de l'élément tubulaire intérieur (3), lesdits moyens de couplage supplémentaires (22) étant configurés de manière à s'engager avec des moyens de couplage intérieurs supplémentaires (23) de l'élément tubulaire extérieur (1).

13. Dispositif selon l'une quelconque des revendications précédentes, dans lequel l'élément tubulaire extérieur est un tube agrafé hélicoïdal (1) constitué à partir d'une feuille de métal, et dans lequel l'élément tubulaire intérieur (3) est également constitué à partir d'une feuille de métal.

14. Dispositif selon la revendication 13, dans lequel l'élément tubulaire intérieur est un connecteur (3).

15. Raccord de ventilation à utiliser comme élément tubulaire intérieur dans le dispositif selon l'une quelconque des revendications 1 à 14, dans lequel le raccord de ventilation comprend lesdits premiers moyens de couplage.

16. Conduit de ventilation à utiliser comme élément tubulaire extérieur dans le dispositif selon l'une quelconque des revendications 1 à 14, dans lequel le conduit de ventilation comprend lesdits deuxièmes moyens de couplage.

17. Système de conduit de ventilation, comprenant au moins un dispositif de connexion de tube selon l'une quelconque des revendications 1 à 14.

18. Utilisation d'un dispositif selon l'une quelconque des revendications 1 à 14 pour connecter des éléments tubulaires, des conduits et/ou des raccords contenus dans un système de conduit de ventilation.

19. Procédé pour connecter des éléments tubulaires d'un système de conduit de ventilation en utilisant un dispositif de connexion de tubes selon l'une quelconque des revendications 1 à 14, le procédé comprenant les étapes suivantes:
a) insérer partiellement un élément tubulaire intérieur dans un élément tubulaire extérieur de manière à former un ajustement serré; et
b) établir un engagement entre des moyens de couplage des éléments tubulaires intérieur et extérieur, respectivement, afin de réaliser ladite connexion des éléments tubulaires.

20. Procédé selon la revendication 19 lorsqu'elle dépend des revendications 1 ou 3, dans lequel une extrémité libre courbée de l'élément tubulaire intérieur est encliquetée en engagement avec des moyens de couplage correspondants sur le côté intérieur de l'élément tubulaire extérieur.

21. Procédé selon la revendication 20 lorsqu'elle dépend de la revendication 4, dans lequel, pendant l'insertion, lesdits creux de l'élément tubulaire extérieur accrochent l'extrémité libre courbée de l'élément tubulaire intérieur, et déforment de ce fait la paroi de tube de l'élément tubulaire extérieur pour former une section transversale non circulaire.
